# EUROPEAN PATENT APPLICATION

(11) **EP 2 990 833 A2**
(43) Date of publication of application: **02.03.2016**
(21) Application number: 15181864.8
(22) Date of filing: 20.08.2015
(51) Int. Cl.: G01V 1/34

(54) **PROJECT TIME COMPARISON VIA SEARCH INDEXES**

(30) Priority: 26.08.2014 US 201462042086 P; 17.08.2015 US 201514828061
(71) Applicant: Services Petroliers Schlumberger, 75007 Paris (FR); Logined B.V., 2586 BJ S Gravenhage (NL)
(72) Inventor: Benum, Trond, 7024 Trondheim (NO)
(74) Representative: Schlumberger Cambridge Research Limited

(57) **Abstract**

A method can include receiving a search criterion; receiving information indicative of a time differential; performing a first search and a second search using the search criterion on a first search index associated with a first time and a second search index associated with a second time where a difference between the first time and the second time approximates the time differential; comparing at least a portion of results of the first search to at least a portion of results of the second search; and rendering at least one search result to a display based at least in part on the comparing.

## Description

### RELATED APPLICATIONS

This application claims priority to and the benefit of a U.S. Provisional Application having Serial No. 62/042,086, filed 26 August 2014 and U.S. Non-Provisional Application having serial No. 14/828,061, filed 17 August 2015, which are incorporated by reference herein.

### BACKGROUND

Various types of modules, frameworks, etc., exist for modeling, analyzing, etc., geological formations, reservoirs, sedimentary basins, etc. In modeling, analyzing, etc., various types of information may be stored in one or more storage devices (e.g., as databases, datastores, datasources, etc.).

### SUMMARY

A method can include receiving a search criterion and information indicative of a time differential. The method may also involve performing a first search and a second search using the search criterion on a first search index that is associated with a first time, and a second search index that is associated with a second time. The difference between the first time and the second time may approximate the time differential. The method may also involve comparing a portion of the results of the first search to a portion of the results of the second search. The method may further involve rendering a search result to a display based part on the comparison.

A system can include one or more processors; memory; and instructions stored in the memory and executable by processors to instruct the system. The instructions can include instructions to receive a search criterion and to receive information indicative of a time differential. The instructions may also cause the system to perform a first search and a second search using the search criterion on a first search index that is associated with a first time and a second search index that is associated with a second time. The difference between the first time and the second time may approximate the time differential. The system may also compare a portion of the results of the first search with a portion of results of the second search and render at results based on the comparison. Various other apparatuses, systems, methods, etc., are also disclosed and may be used to implement methods as described above or within this description.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Features and advantages of the described implementations can be more readily understood by reference to the following description taken in conjunction with the accompanying drawings.
Fig. 1 illustrates an example system that includes various components for simulating a geological environment;
Fig. 2 illustrates an example of a system;
Fig. 3 illustrates an example of a method;
Fig. 4 illustrates examples of graphical user interfaces;
Fig. 5 illustrates examples of graphical user interfaces;
Fig. 6 illustrates an example of a graphical user interface;
Fig. 7 illustrates an example of a graphical user interface;
Fig. 8 illustrates an example of a graphical user interface;
Fig. 9 illustrates an example of a graphical user interface;
Fig. 10 illustrates an example of a system;
Fig. 11 illustrates an example of a method;
Fig. 12 illustrates an example of a method;
Fig. 13 illustrates example plots;
Fig. 14 illustrates an example of a method;
Fig. 15 illustrates an example of a method and an example of a plot;
Fig. 16 illustrates an example of a method and an example of a system; and
Fig. 17 illustrates example components of a system and a networked system.

### DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

Resource exploration and development as well as production can include data acquisition and modeling. For example, a model of a geologic environment may be built based at least in part on acquired data. As an example, such a model may be a simulation model, for example, to simulate one or more physical phenomena. As an example, a model may be a way of structuring data, for example, where such data may facilitate economic or other analyses (e.g., optionally without simulation of physical phenomena). Whether for simulation or other purpose, data associated with a model may be considerable and may, for example, include data associated with one or more other models. As an example, data may be quantitative, qualitative or both quantitative and qualitative. As an example, data may be stored in one or more data stores, which may be considered data sources.

As an example, the value of data may be enhanced via aggregation, classification, etc. As an example, data may have one or more associated attributes that characterize the data, for example, consider data characterized by type of data (e.g., sensor data, simulation data, economic data, etc.). In such an example, data may be characterized, for example, in addition to including values, which may be qualitative, quantitative, etc. As an example, a search engine may be configured to access data based on one or more values, attributes, etc. For example, a search engine may perform a search based at least in part on indexed data values, data attributes, etc., which may facilitate searches. For example, an index or indexes may be generated for data, optionally where the data may be available from multiple sources, where the data includes data available from multiple sources, etc.

As an example, search results returned by a search engine that performs a search based on one or more search criteria may be presented as items in a table, for example, as items of a list. As an example, items may be presented in another format. As an example, the order of the items in a list may be based, for example, on relevance with respect to a search criterion or search criteria, numerical order, or alphabetical order.

As an example, results may be structured according to one or more structuring criteria, for example, that may form one or more levels of a hierarchy. As an example, consider a scenario where if a user selects the following structuring criteria "Project", "Well Type" and "User", results from a search may be presented in a virtual tree hierarchy that shows projects at a first level in the tree (per the "Project" criterion), where one or more project folders may be expanded to show well types as a second level (per the "Well Type" criterion), and where one or more well type folders may be expanded to show users as a third level (per the "User" criterion). In such an example, when a user opens up a folder for a specific project (e.g., project "X"), the user may then see a list of child nodes (e.g., child folders) for the well types in project X. In such an example, if the user then opens up a specific well type (e.g., "Oil"), the user may then see a list of users (e.g., child folders) that have modified the "Oil" wells in project "X". Further, as an example, if the user then opens up a folder for a given user (e.g., user "Y"), the user may see a list of oil wells in project X modified by user "Y".

As an example, a structuring criterion may be an attribute, for example, an attribute associated with data. For example, "project" may be a structuring attribute associated with project data for a project or projects, which may be at a level that encompasses various other attributes for a project (e.g., as defined by a project framework). As an example, an attribute may be referred to as a path attribute, for example, akin to a path term in a file system.

As an example, a search tool can provide for returning structured data (e.g., exploration and production data "E&P data") such as, for example, wells and seismic objects (e.g., as entities in a model, entities in a field, etc.). As an example, search results may be visualized in one or more 2D/3D canvases (e.g., panels rendered to a display) and, for example, optionally in a table viewer (e.g., in a table format). As an example, provided with one or more structuring criteria, search results may be presented according to such criteria (e.g., consider a path attribute akin to a folder path in a file system). For example, structuring criteria may specify hierarchical levels for nesting of search results where "folders" may be presented to a graphical user interface, the folders being expandable and collapsible with respect to the hierarchical levels. As an example, search results may be rendered to a graphical user interface on a display as an interactive tree of folder branches and search item leaves.

As an example, a search module may provide for searching via a search engine. As an example, the STUDIO E&P^{™} knowledge environment (Schlumberger Ltd., Houston, Texas) includes STUDIO FIND^{™} search functionality, which provides a search engine. The STUDIO FIND^{™} search functionality also provides for indexing content, for example, to create one or more indexes. As an example, search functionality may provide for access to public content, private content or both, which may exist in one or more databases, for example, optionally distributed and accessible via an intranet, the Internet or one or more other networks. As an example, a search engine may be configured to apply one or more filters from a set or sets of filters, for example, to enable users to filter out data that may not be of interest.

As an example, the PETREL® seismic-to-simulation framework (Schlumberger Ltd., Houston, Texas) may provide for interaction with a search engine and, for example, associated features such as features of the STUDIO FIND^{™} search functionality. As an example, a framework may provide for implementation of one or more spatial filters (e.g., based on an area viewed on a display, static data, etc.). As an example, a search may provide access to dynamic data (e.g., "live" data from one or more sources, optionally including a GIS source), which may be available via one or more networks (e.g., wired, wireless, etc.). As an example, one or more modules may optionally be implemented within a framework or, for example, in a manner operatively coupled to a framework (e.g., as an add-on, a plug-in, etc.). As an example, a module for structuring search results (e.g., in a list, a hierarchical tree structure, etc.) may optionally be implemented within a framework or, for example, in a manner operatively coupled to a framework (e.g., as an add-on, a plug-in, etc.).

As an example, a search engine may be implemented to search for data. Over time, data may be added, deleted, modified, etc. As an example, a search engine may operate using a search index. Search engine indexing collects, parses, and stores data to facilitate fast and accurate information retrieval. A search index may be structured with respect to various types of informational concepts such as, for example, concepts stemming from linguistics, cognitive psychology, mathematics, informatics, physics, and computer science. Where data are web pages (e.g., on the Internet or other network), search engine indexing may be referred to as web indexing.

As an example, a search engine may operate via full-text indexing of online, natural language documents. As an example, a search engine may operative via indexing that can index one or more types of media such as, for example, video, audio, graphics, etc.

As an example, a so-called meta search engine may reuse one or more search indices of one or more other services, for example, without possessing its own search index. As an example, a cache-based search engine may store an index along with a corpus. As an example, a partial-text service may restrict a depth indexed to reduce index size. As an example, a larger service may perform indexing at a predetermined time interval due to time and processing costs, while a so-called agent-based search engine may index information in real time.

Storage of a search index can optimize speed and performance in finding relevant documents, files, etc., with respect to a search query (e.g., one or more search criteria). For example, without a search index, a search engine would operate by scanning documents, files, etc. in a corpus, which may take considerable time and computing power. For example, while an index of 10,000 documents may be queried within milliseconds, a sequential scan of individual words in 10,000 large documents could take hours.

As an example, the aforementioned STUDIO FIND^{™} search functionality can populate a search index to allow a user to search one or more databases. As an example, such search functionality may include features that allow for comparison of data across projects, etc.

As an example, search indexes may be stored over time to create a historical search index archive. For example, consider a time frame of about five years where a search index is updated once a week. In such an example, a historical search index archive may include over 250 search indexes where each of the search indexes represents a respective corpus at a particular time.

As an example, a search functionality may include a time selection criterion to select one or more times and/or a time differential such that one or more comparisons may be made with respect to corpuses at corresponding times. Where search functionality allows for entry and/or selection of one or more search criteria (e.g., as to content of a corpus), differences over time may be presented based on search results for two or more search indexes. As an example, a selection of a time may be associated with a "closest" time of an index. For example, where a time is a day of the week and where indexes are on a weekly basis on a Sunday, a "closest" corresponding time may be the closest Sunday. In such a manner, a time of an index may approximate a selected time (e.g., given times of indexes that are available, can be made available via generation, etc.).

As an example, a comparison tool may be implemented for taking a snapshot of a search index that is updated at given intervals. For example, consider a comparison tool that can show monthly changes to a search index (e.g., via accessing historical search indexes). As an example, a time increment for a tool may be equal to or greater than a time increment for updating a search index.

As an example, a tool may include a comparison feature that allows a user to compare search results backwards in time by letting the user drag a slider to select a snapshot of the search index to compare with. In such an example, the slider may be configured with time increments that correspond to time increments that are equal to or greater than time increments as to available historical search indexes (e.g., generated via updating of a search index of a search engine).

As an example, a user may activate a historical comparison feature such that a system connects to one or more appropriate corresponding "old" search indexes (e.g., historical search indexes) to run a common query across two or more search indexes where one of the search indexes may be a current (e.g., latest) search index. As an example, a system may include a storage for storing one or more queries such that a user can readily perform a time span analysis of information. As an example, a system may include a storage for storing one or more sets of search results such that a user can readily perform a search index-based query and compare results thereof to one or more sets of stored search results. As an example, a method may include retrieving items from a search index-based query and comparing those items with items returned from the current time search index-based query. Such an approach may give a user a quick overview of what has changed. As an example, where a slider tool is available (e.g., or wheel, etc.), a user may drag the slider back and forth (e.g., or rotate a wheel) to understand better when one or more changes were been made.

In the context of the STUDIO FIND^{™} search functionality, a tool that allows for comparing historical changes may facilitate management of one or more project, which may be at one or more stages. Such an approach may provide a user with a trajectory of how one or more projects are progressing with respect to time.

As an example of a system is described below, which may include a framework and associated components (e.g., modules, etc.), followed by examples of systems, methods, graphical user interfaces, etc.

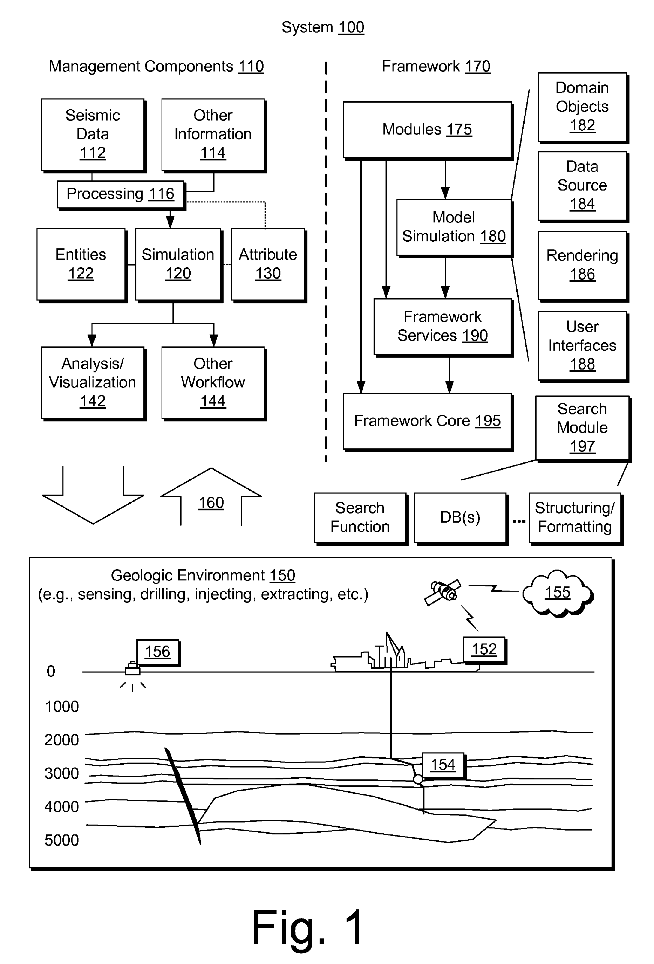

Fig. 1 shows an example of a system 100 that includes various management components 110 to manage various aspects of a geologic environment 150. For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Fig. 1, the management components 110 include a seismic data component 112, an information component 114, a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include, for example, earth entities or geological objects such as wells, surfaces, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114).

In an example embodiment, the simulation component 120 may rely on a software framework such as an object-based framework. In such a framework, entities may include entities based on pre-defined classes to facilitate modeling and simulation. A commercially available example of an object-based framework is the MICROSOFT® .NET^{™} framework (Redmond, Washington), which provides a set of extensible object classes. In the .NET^{™} framework, an object class encapsulates a module of reusable code and associated data structures. Object classes can be used to instantiate object instances for use in by a program, script, etc. For example, borehole classes may define objects for representing boreholes based on well data.

In the example of Fig. 1, the simulation component 120 may process information to conform to one or more attributes specified by the attribute component 130, which may include a library of attributes (e.g., including seismic attributes). Such processing may occur prior to input to the simulation component 120. Alternatively, or in addition to, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Fig. 1, the analysis/visualization component 142 may allow for interaction with a model or model-based results. Additionally, or alternatively, output from the simulation component 120 may be input to one or more other workflows, as indicated by a workflow component 144.

In an example embodiment, the management components 110 may include features of the PETREL® seismic-to-simulation software framework. The PETREL® framework provides components that can allow for optimization of exploration and development operations. The PETREL® framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of simulating a geologic environment).

In an example embodiment, the management components 110 may include features for geology and geological modeling to generate high-resolution geological models of reservoir structure and stratigraphy (e.g., classification and estimation, facies modeling, well correlation, surface imaging, structural and fault analysis, well path design, data analysis, fracture modeling, workflow editing, uncertainty and optimization modeling, petrophysical modeling, etc.). Particular features may allow for performance of rapid 2D and 3D seismic interpretation, optionally for integration with geological and engineering tools (e.g., classification and estimation, well path design, seismic interpretation, seismic attribute analysis, seismic sampling, seismic volume rendering, geobody extraction, domain conversion, etc.). As to reservoir engineering, for a generated model, one or more features may allow for a simulation workflow to perform streamline simulation, reduce uncertainty and assist in future well planning (e.g., uncertainty analysis and optimization workflow, well path design, advanced gridding and upscaling, history match analysis, etc.). The management components 110 may include features for drilling workflows including well path design, drilling visualization, and real-time model updates (e.g., via real-time data links).

In an example embodiment, various aspects of the management components 110 may include add-ons or plug-ins that operate according to specifications of a framework environment. For example, the framework environment marketed as the OCEAN® framework environment can allow for integration of add-ons (or plug-ins) into a PETREL® framework (e.g., for implementation in a workflow). The OCEAN® framework environment leverages .NET® tools (Microsoft Corporation, Redmond, Washington). In an example embodiment, various components may be implemented as add-ons (or plug-ins) that conform to and operate according to specifications of a framework environment (e.g., according to application programming interface (API) specifications, etc.).

Fig. 1 also shows an example of a framework 170 that includes a model simulation layer 180 along with a framework services layer 190, a framework core layer 195 and a modules layer 175. The framework 170 may include the commercially available OCEAN® framework where the model simulation layer 180 is the commercially available PETREL® seismic-to-simulation framework that can host OCEAN® framework applications.

The model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components (e.g., a user interface environment that aims to provide a relatively harmonious, comprehensible user experience).

In the example of Fig. 1, the domain objects 182 can include entity objects, property objects and optionally other objects. Entity objects may be used to geometrically represent wells, surfaces, reservoirs, etc., while property objects may be used to provide property values as well as data versions and display parameters. For example, an entity object may represent a well where a property object provides log information as well as version information and display information (e.g., to display the well as part of a model).

In the example of Fig. 1, data may be stored in one or more data sources (e.g., data stores), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored, for example, using the model simulation layer 180, which can recreate instances of the relevant domain objects.

In the example of Fig. 1, a search module 197 may be provided that allows for integration with a search engine (e.g., the STUDIO FIND^{™} search engine), one or more databases, one or more structuring modules, one or more formatting modules, one or more search indexes (e.g., historical search indexes), etc. In an example embodiment, the search module 197 may be part of the framework 170 and provide for "plugging-in" to one or more other modules (e.g., whether local or remote).

As an example, the search module 197 may receive data responsive to input from a pointing device (e.g., via a computer bus, network, wireless, etc. connection). In turn, the module 197 may communicate the data in appropriate form to a database server (e.g., via a network, whether wired or wireless), optionally in a manner specified by one or more application programming interfaces (APIs) associated with the database server. In response, the module 197 may receive information (e.g., via a network) from the database server (e.g., where the module 197 makes an API call and the server responds to the call according to a specification for the API). The module 197 may then process at least some of the information (e.g., structuring, formatting, etc.), which may be returned, for example, to process a workflow associated with the framework 170. As an example, the module 197 may provide for historical search index-based comparisons. For example, one or more comparisons may be performed with respect to time for a project, etc. using one or more historical search indexes.

In the example of Fig. 1, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc.

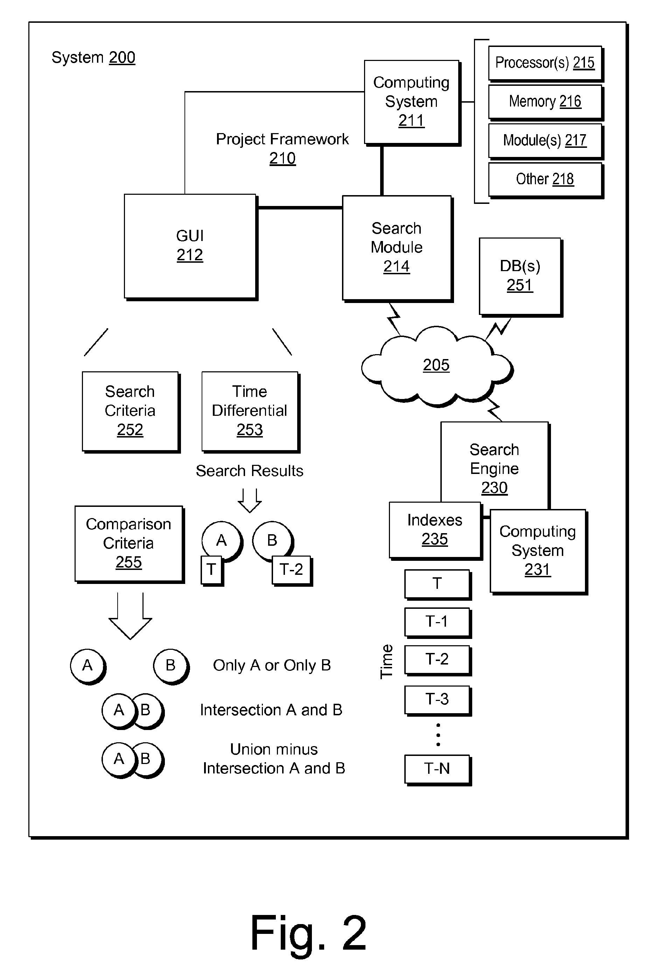

Fig. 2 shows an example of a system 200 that includes a computing system 211, a computing system 231, and a database 251 (e.g., including a server or servers) configured for communication via one or more networks 205. The computing system 211 provides for execution of a project framework 210 to present a GUI 212 and of a search module 214. Through interaction with the GUI 212, instructions and data may be transmitted by the module 214 via the network 205 to the computing system 231, which provides for execution of a search engine 230 that operates according to one or more of the indexes 235 (see, e.g., historical indexes T-1, T-2, T-3 to T-N, where T may represent a current time or current search index time). In the example of Fig. 2, the computing system 231 may transmit information to the computing system 211. As an example, the indexes 235 may pertain to items stored or previously stored in the database 251, for example, according to a file system.

In the example of Fig. 2, the computing system 211 and/or the computing system 231 can include one or more processors 215, one or more memories 216 (e.g., RAM, ROM, etc.) accessibly by at least one processor, one or more modules 217 and/or one or more other types of circuitry 218 (e.g., hardware, software, hardware and software). As an example, a computing system can include one or more types of interfaces (e.g., network interfaces, data interfaces to data storage devices, etc.). As an example, a module may be an instruction module that includes, for example, instructions that can be stored in memory and executable by at least one of one or more processors, for example, to instruct a system to perform one or more actions. An action may include one or more of accessing information, receiving information, transmitting information, storing information, calculating information, rendering information, etc.

In the example of Fig. 2, a search criteria (SC) module 252, a time differential module (TD) 253 and a comparison criteria (CC) module 255 are shown. As an example, the SC module 252 may allow a user to input one or more search criteria while the TD module 253 may allow a user to input a time differential and/or one or more times. As to the CC module 255, it may provide for input of one or more comparison criteria for search results (e.g., search results items) where the search results include search results from two or more of the search indexes 235 where a difference exists as their times of creation, update, etc. As an example, the modules 252, 253 and 255 may be operatively coupled to the GUI 212. As an example, the module 255 may provide a default comparison, which may be, for example, a user defined default comparison or, for example, a default comparison associated with a particular task, workstep, workflow, etc. As an example, the module 253 may provide a graphical control that can be rendered to the GUI 212 where the graphical control may include, for example, a slider, a wheel, one or more time entry/selection fields, etc.

As shown in the example of Fig. 2, the CC module 255 may allow for results to be compared according to a Venn diagram approach. For example, where results A and B returned from two different ones of the search indexes 235, the CC module 255 may allow for presentation of results A, for presentation of results B, for presentation of an intersection of results A and results B, for presentation of a union of results A and results B, for presentation of a union minus an intersection of results A and results B, etc. As an example, search results may be items where such items are specified according to a corresponding search index as searched by a search engine.

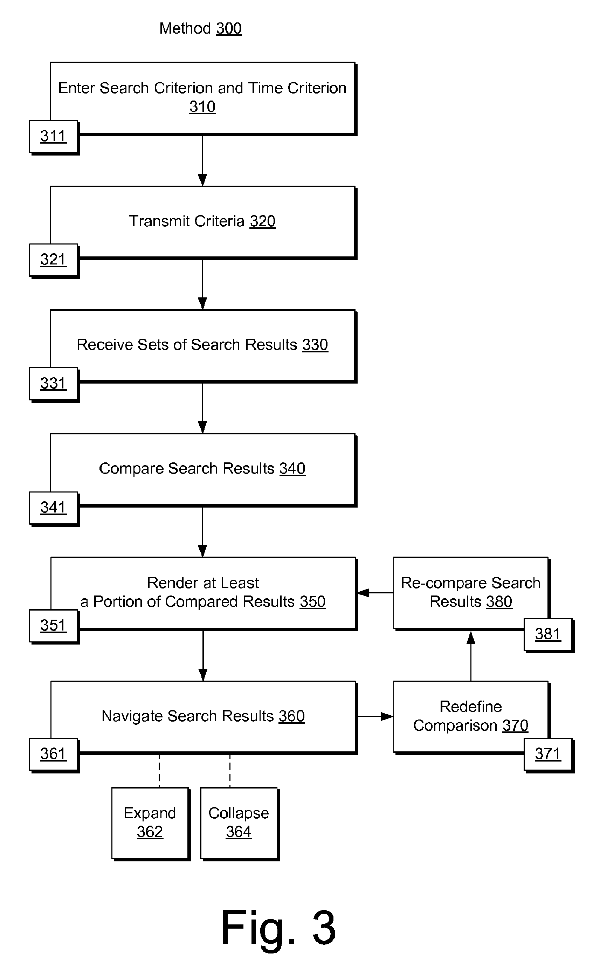

Fig. 3 shows an example of a method 300. The method 300 includes an entry block 310 for entering search and time criteria (e.g., one or more search criteria and one or more time criteria), a transmission block 320 for transmitting the criteria, a reception block 330 for receiving at least two sets of search results based on the criteria (e.g., a set for one time of a search index and a set for another time of a search index), a compare block 340 for comparing the sets of search results based at least in part on a comparison criterion, a render block 350 for rendering at least a portion of the compared results (e.g., as a graphic, a list, etc. to a display) and a navigation block 360 for navigating the search results (e.g., optionally using a a tree functionality). As an example, per an expand block 362, navigating may include expanding a portion of a tree structure and, per a collapse block 364, navigating may include collapsing a portion of a tree structure.

As an example, the method 300 may include a redefinition block 370 for redefining a comparison criterion (e.g., optionally using a Venn diagram approach, etc.) and a re-comparison block 380 for re-comparing the sets of search results according to a redefined comparison criterion. In turn, the method 300 may include rendering at least a portion of the re-compared sets of search results (e.g., as a graphic, a list, etc. to a display).

The method 300 is shown in Fig. 3 in association with various computer-readable media (CRM) blocks 311, 321, 331, 341, 351, 361, 371 and 381. Such blocks generally include instructions suitable for execution by one or more processors (or cores) to instruct a computing device or system to perform one or more actions. While various blocks are shown, a single medium may be configured with instructions to allow for, at least in part, performance of various actions of the method 300. As an example, a computer-readable medium may be non-transitory and not a carrier wave.

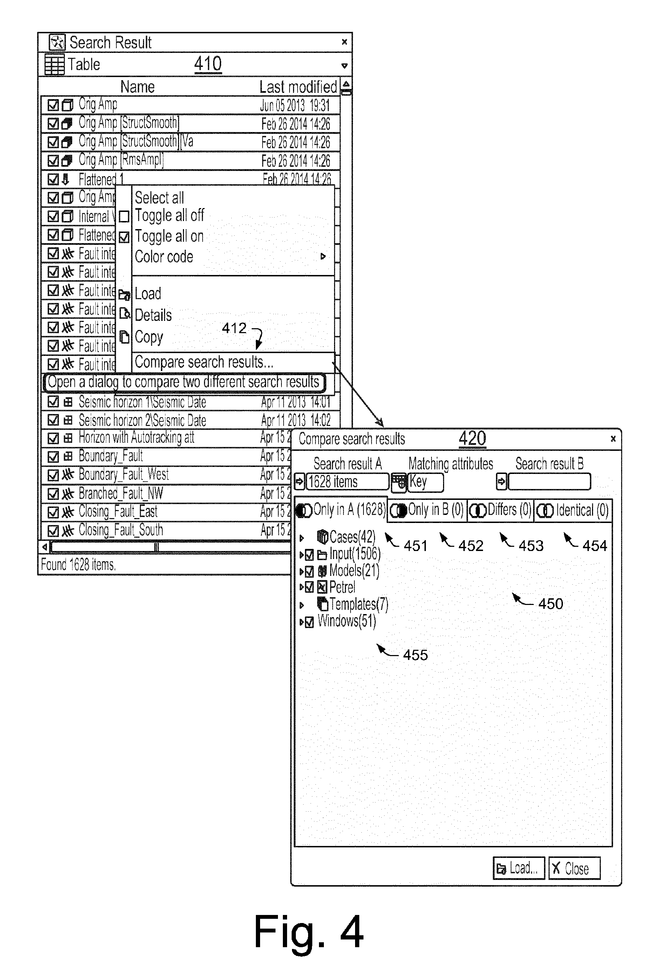

Figs. 4 to 9 show examples of graphical user interfaces (GUIs). Fig. 4 shows an example GUI 410 and an example GUI 420. In Fig. 4, a user may select a result set (or a subset) from a search functional such as, for example, the STUDIO FIND^{™} search functionality. As shown, the GUI 410 can include a compare control 412 (e.g., as an item in a context menu, etc.) that may be actuated upon receipt of input (e.g., mouse click, touch, voice command, etc.) such that a computing system may launch a GUI such as, for example, the GUI 420 (e.g., a "Compare search results" GUI).

As an example, in the scenario of Fig. 4, a user may run another search in "Find" and, for example, select a compare action (e.g., a compare criterion) or, for example, drag the hits over to a compare dialog graphical control. In the example of Fig. 4, the user may see, as rendered to a display, which items differ in two sets of search results, etc. As an example, a user may modify one or more keys used for matching as well as specify that the user may wish to ignore (e.g., certain attributes in the comparison). As an example, a system may include functionality as to a "shopping bag". For example, a user may open a shopping bag and compare items from shopping bags. As an example, save/open options may be available via a GUI as to a shopping bag (e.g., a shopping bag dialog, etc.).

As an example, in Fig. 4, the GUI may be utilized as part of a workflow. For example, where results from a search are available, a graphical control may allow for selection of at least a portion of the search results (e.g., a first set) for comparison to another set of search results (e.g., a second set). In such an example, as shown in the GUI 420, a user may navigate those results (e.g., search records) that exist in the first set, those that exist in the second set, those that differ and those that are the same.

In the example GUI 420 of Fig. 4, various tabs 450 are included, where selection of a tab 451, 452, 453 or 454 can call for additional information broken out by categories 455 (e.g., input, models, framework, template, etc.) to be rendered to a display. As shown in the example of Fig. 4, the tab 451 is an "Only in A" control, the tab 452 is an "Only in B" control, the tab 453 is a "Differs" control and the tab 454 is an "Identical" control. Thus, for two sets of search results A and B, the GUI 420 can readily be navigated to assess results only in A that meet one or more matching attributes (e.g., one or more criteria), results only in B that meet one or more matching attributes (e.g., one or more criteria), results that differ for A and B and results that are identical for A and B. In the example of Fig. 4, the categories 455 include check boxes as well as drop down menu controls, where appropriate. Such an approach allows for further navigation of results.

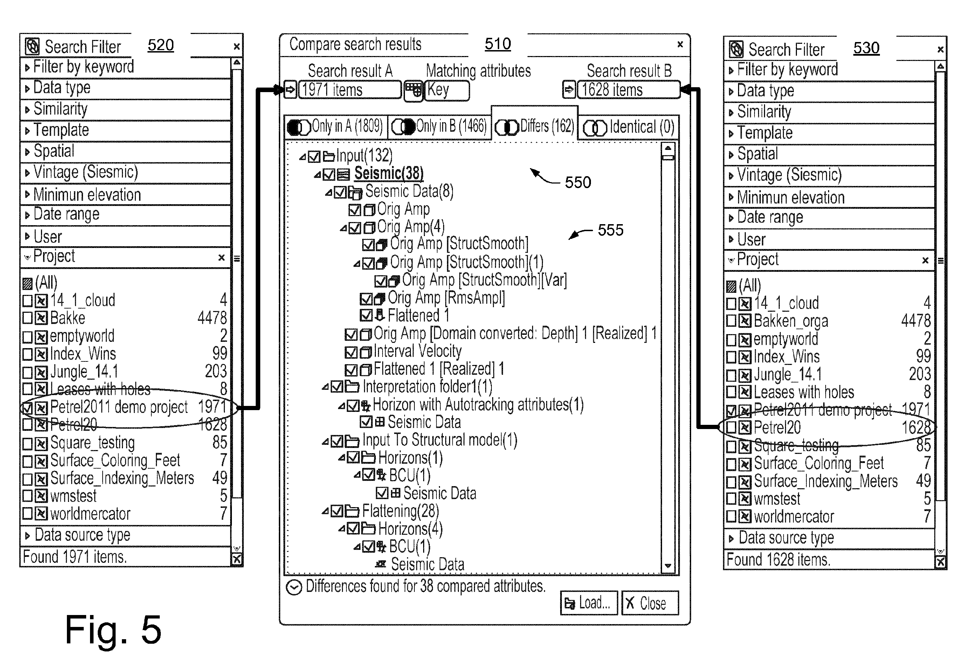

As an example, the tabs 451, 452, 453 and 454 maybe color coded (e.g., blue, yellow, red and green, etc.), which may allow for learning/training of use and more expeditious navigation of results and comparisons thereof. In the example of Fig. 4, the tabs 451, 452, 453 and 454 show numbers (see also, e.g., Fig. 5). In such an approach, the numbers represent items (e.g., search result items, items of a project, etc.), which may be, for example, broken into categories with associated numbers as to such items (see, e.g., the categories 455; see also, e.g., Fig. 5).

Fig. 5 shows examples of GUIs 510, 520 and 530 where a comparison is made as to a project which has been duplicated at a point in time. In the example of Fig. 5, the GUI 510 includes tabs 550, which may be tabs such as the tabs 450 of the GUI 420 of Fig. 4. As shown, the tabs 550 include numbers that correspond to search result items per a comparison or comparisons. In Fig. 5, categories 555 are also shown where an individual category can include a number (e.g., for a corresponding search result or search results).

As shown in Fig. 5, one or more search filter GUIs 520 and 530 may be rendered to a display where each of the search filter GUIs 520 and 530 corresponds to a particular number of items, which may be selectable via check box controls. As shown, various types of filter criteria may be rendered and selectable. In the example of Fig. 5, the search filter GUI 520 shows selection of 1971 items that correspond to the search results A of the GUI 510 and the search filter GUI 530 shows selection of 1628 items that correspond to the search results B of the GUI 510. As shown, the "Differs" control tab is selected where 162 items exist, as listed in the categories 555. As to "Seismic Attributes", per the second item in the categories 555 (e.g., selectable as indicated by bold and underlining), in the GUI 510, a text field indicates that "Differences found for 38 compared attributes".

In the example of Fig. 5, a search may be performed to determine one or more ways in which the projects are the same and/or differ. For example, a project may be duplicated to provide a starting point for another project where one or more additions, subtractions, modifications, etc. may be made to alter the other project as may be desired to suit a particular scenario (e.g., a well, a field operation, environmental conditions, etc.). As an example, an approach as illustrated in Fig. 5 may provide a time-lapse view of changes that have occurred to one or both projects. In such an example, a quality control workflow may determine whether relevant differences have been addressed in adapting one project as a basis for another project. For example, where one type of data is modified, a recommendation may be to modify some amount of associated data. Where a comparison indicates that such a modification has not yet occurred, a quality control workflow may generate a notification to make the modification.

As an example, one project may overlap spatially with another project. For example, consider wells A, B and C in one project and wells C, D and E in another project. In such an example, a comparison of the projects may be performed to determine whether well C data are matched or differ. As an example, where one or more differences exist, a user may decide to select a set of data for replication (e.g., such that the projects match as to well C data).

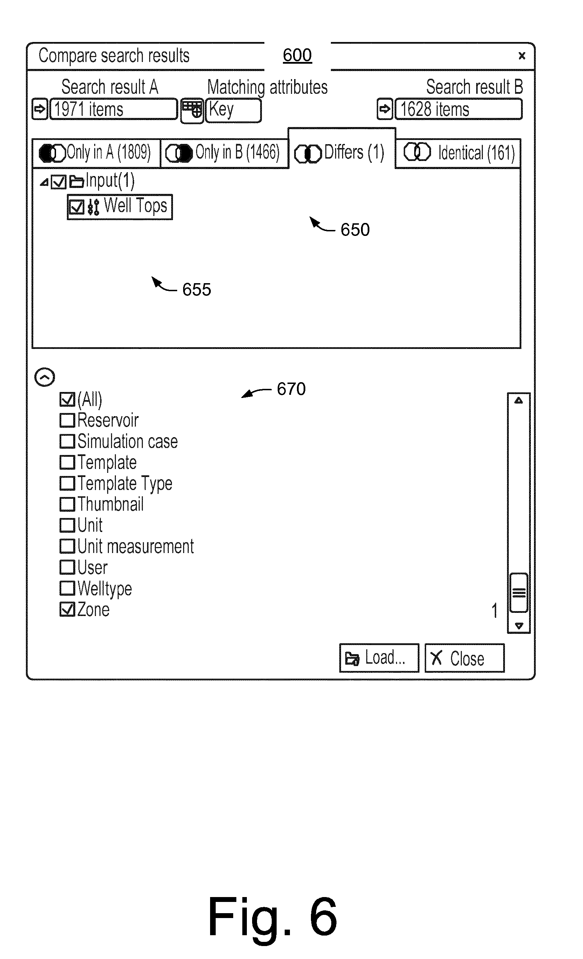

Fig. 6 shows an example GUI 600 that allows a user to revise criteria (e.g., attributed to be compared, etc.). As shown, the GUI 600 includes tabs 650 and category 655 controls. In the example of Fig. 6, a user may expand a lower section and see a detailed breakdown control 670, for example, per attribute to see which attributes differ. As an example, a user may uncheck one or more attributes to exclude them from a comparison. Such an approach may be useful for workflows such as where a method includes comparing wells across two different datastores and where the data model is different.

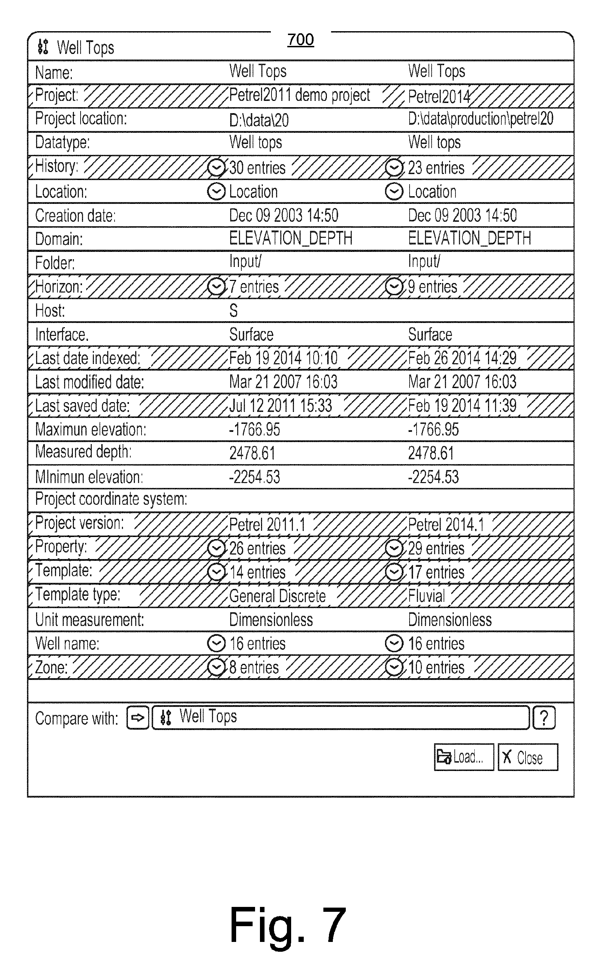

Fig. 7 shows an example GUI 700 that shows, as an example, well top information. As an example, a GUI may provide functionality such as a double click functionality as to an item, for example, to see detailed differences. In the example of Fig. 7, the GUI 700 shows a version 2011.1 framework and a version 2014.1 framework. Below these framework fields exist listings of entries as to properties and templates. As shown, a difference may be uncovered as to template type, for example, one type can be general discrete and another type fluvial. Such information may highlight differences in versions of frameworks and indicate what features of a later version may be suitable for use where a project is to be migrated to the later version. As an example, a migrated project may be compared to a prior version, prior to migration. In such an example, one or more differences may be highlighted, for example, as part of a quality control workflow to determine whether migration may have occurred effectively and/or whether adjustments, modifications, etc., may be recommended.

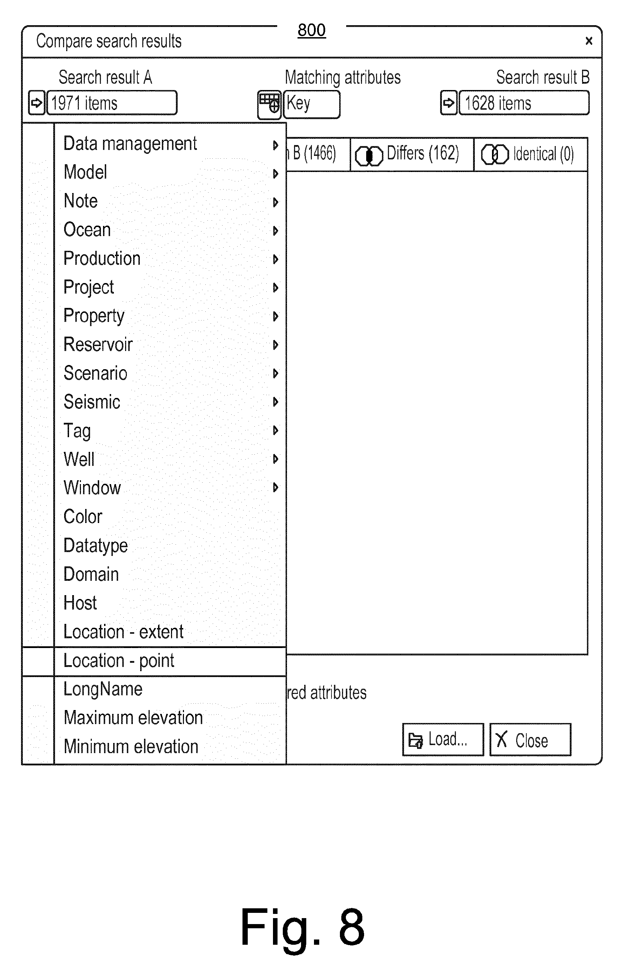

Fig. 8 shows an example GUI 800 that includes functionality to compare various search results. For example, a user may revise a lookup by selecting an item from a menu such as "geographical location". As an example attributes present in two sets of results may be available for matching. As an example, a function may be a geohash function that allows for matching items based on geographic location. As an example, a system can include features that support accuracy for geohash and floating point attributes.

In the example of Fig. 8, such an approach may be implemented to compare different repositories. For example, consider repositories where data may be in different formats, of different types, etc. In such an example, one or more names, geo-coordinates, etc., may be common and/or otherwise comparable. As an example, a search may aim to associate data from disparate data sources, optionally based at least in part on time, using one or more hash types of approaches. For example, a geohash, a name hash, a combination geo-and name hash, etc. As an example, a GUI may include a control that calls for execution of one or more hash algorithms that can hash one or more entries, numbers, etc. to generate a hash value. In such an example, hash values may be determined and/or exist within an index for purposes of searching, comparing, etc.

As an example, a geohash may be a unique identifier. As an example, a geohash may represent point and/or region data in one or more databases, which may optionally be associated with an entity, a geologic feature, etc. As an example, information may be geotagged in a database or databases (e.g., or an index or indexes).

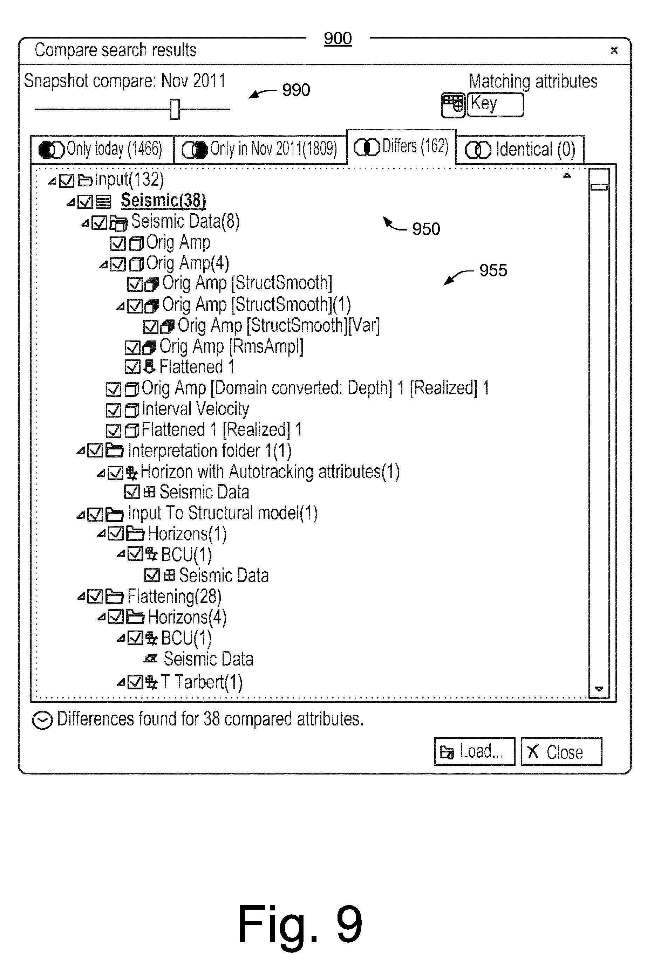

Fig. 9 shows an example GUI 900 for performing a time-based comparison, for example, using two different search indexes where the indexes differ as to the time at which they were created, updated, etc. For example, one search index may be for a present time while another search index may be for a historic time. As an example, a slider tool 990 may be rendered as a graphical control of the GUI 900 where a span of the slider tool 990 corresponds to a span of search indexes with respect to historic times (see, e.g., the search indexes 235 of Fig. 2). In the example of Fig. 9, tabs 950 and category 955 controls are also shown, which may be updated responsive to an adjustment or adjustments made via the slider tool 990. For example, as the slider tool 990 is actuated, the results rendered to the tabs 950 and categories 955 may be updated in response (e.g., triggered by a adjustment to the slider tool 990).

As an example, STUDIO FIND^{™} search functionality may include a tool such as the slider tool 990 of the GUI 900. As an example, one or more features may be implemented with respect to STUDIO MANAGER^{™} functionality. For example, consider management functionality that archives search indexes with respect to time. In such an example, the archive may be accessed to perform a search or searches. As an example, archiving may occur less frequently than updating of a search index. For example, a search index may be updated daily and a archiving may occur weekly.

As an example, a GUI may include a compare dialog that allows for input of one or more comparison criteria as to historical comparisons. For example, consider a compare dialog graphical control that allows a user to view differences in time for the current search. As an example, a search result A and search result B approach may be implemented and/or a time control approach such as, for example, the time slider approach shown in the GUI 900 of Fig. 9. As an example, when a user moves the slider, an instruction (or instructions, commands, etc.) may be issued that calls for running a search against a particular time lapse index (e.g., to get the equivalent search result for that point in time) and run the comparison. In such an example, a user may then see how a repository (e.g., a corpus) has changed over time.

As an example, consider a scenario where a project or a portion of a project has been duplicated a plurality of times. For example, consider a well that has been duplicated in ten different projects. A search may provide for visualization of how the well data may have changed or not in each of the projects. Further, a search may provide for determining who may have duplicated the well and how one or more individuals may be related (e.g., group-wise, company-wise, location-wise, etc.) to determine why and/or how the well was selected for duplication. As an example, a search may be part of a quality control workflow that aims to uncover projects or portions of a project that have been duplicated, which may optionally allow for development of one or more templates, framework features, etc.

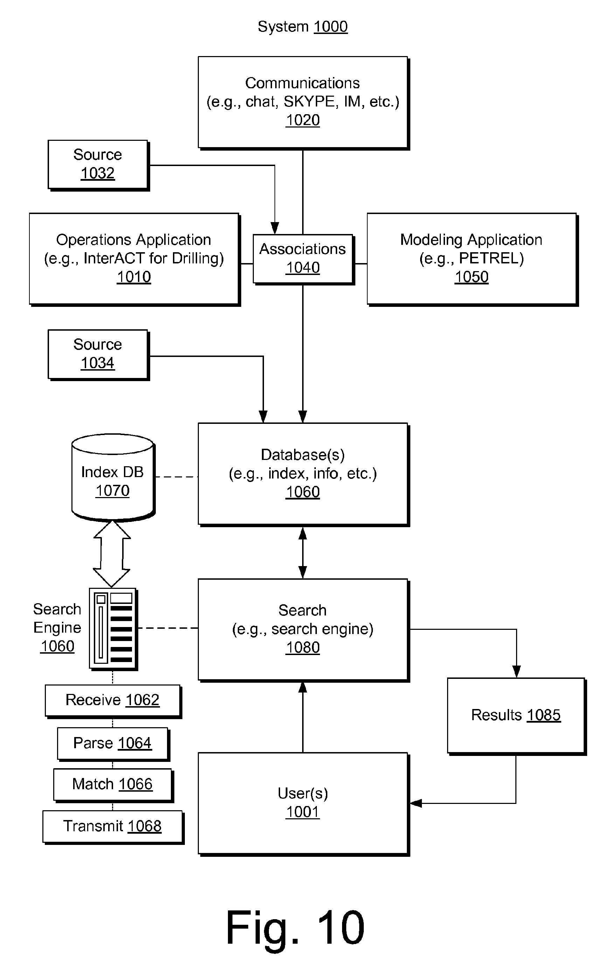

Fig. 10 shows an example of a system 1000 that includes a search engine 1060 and an index database 1070 (e.g., for storing a plurality of search indexes with respect to time). As an example, the index database 1070 may provide one or more search indexes where a GUI may include a query field for entry of a query and a control for transmission of the query to the search engine 1060 (e.g., a server or other computing device or system) where the search engine 1060 may include a reception module 1062 to receive a query, a parse module 1064 to parse the query, a match module 1066 to search for one or more matches (e.g., to information, terms, etc., included in the query) and a transmission module 1068 to transmit at least one of the one or more matches for presentation as results in a results GUI. As mentioned, where functionality is provided to retrieve and compare search results from two different search indexes, the transmitted results per the transmission module 1068 may include multiple sets of results. As an example, a compare module may interact with the results module 1085, as explained, for example, with respect to the GUI 900 of Fig. 9.

In the example of Fig. 10, the system 1000 includes an operations application module 1010, a communications module 1020, source modules 1032 and 1034, an associations module 1040, a modeling application module 1050, a database module 1060, and a search index module 1080. The modules 1010, 1020, 1032, 1034 and 1050 may provide access to various sources of information. As an example, a system may include one or more such modules, for example, to provide access to one or more sources of information.

In the example of Fig. 10, a user module 1001 provides for one or more users to enter one or more search terms, criteria, etc., to the search index module 1080 where the search index module 1080 can return one or more results (e.g., items) per a results module 1085 (e.g., or an indication that no results match the search). In the example of Fig. 10, associations may be made by the associations module 1040 based on such types of information and associated information may optionally be stored in one or more databases per the database module 1060. Such information may be indexed for purposes of searching per the search index module 1080. As additional information is generated in one or more of the operations application module 1010, the communications module 1020, the modeling application module 1050, the search index module 1080 may perform additional indexing to update an index, for example, to dynamically enrich the search capabilities.

In the example of Fig. 10, an index approach to search can enhance performance in finding relevant documents responsive to a query. The search index module 1080 may include search engine functionality for indexing where indexing may include collecting, parsing, and storing data to facilitate information retrieval.

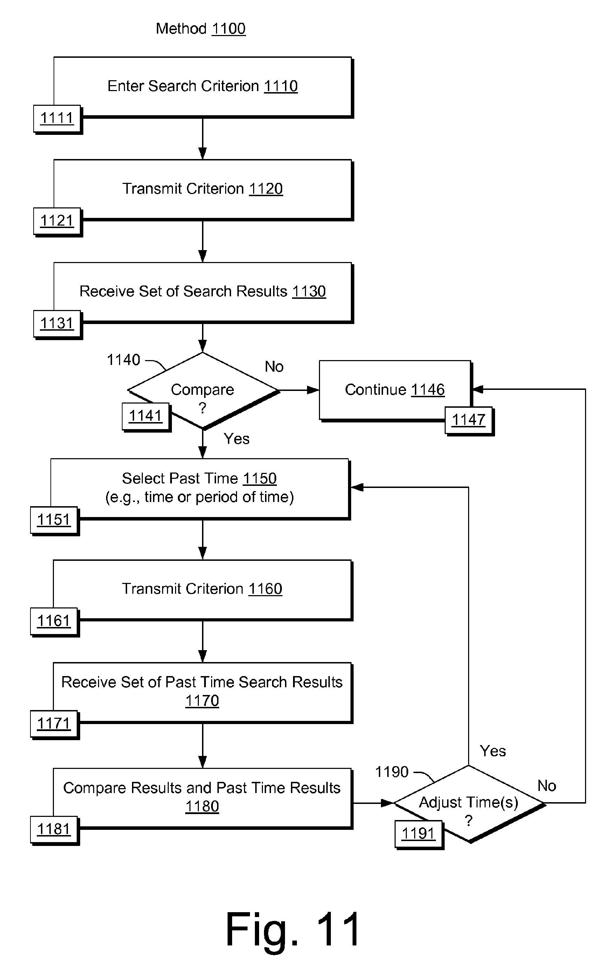

Fig. 11 shows an example of a method 1100 that includes an entry block 1110 of entering a search criterion (e.g., receiving a search criterion via a graphical user interface of a computing device, etc.), a transmission block 1120 for transmitting the criterion, a reception block 1130 for receiving a set of search results responsive to performing a search using at least the criterion, a decision block 1140 for deciding whether to compare at least a portion of the search results to other search results, a selection block 1150 for selecting a past time or times, a transmission block 1160 for transmitting the search criterion, a reception block for receiving a set of past time search results and a comparison block 1180 for comparing at least a portion of the set of search results and at least a portion of the past time search results. The method 1100 may include another decision block 1190, for example, for deciding whether to adjust one or more times. If the decision block 1190 decides to adjust a time or times, the method 1110 may continue at the selection block 1150 for selecting one or more past times, for example, where the selected one or more past times may not encompassed within a previously selected time or times. Where an adjustment includes a time or times within a previously selected one or more past times, a method may include honing received search results, for example, rather than retrieving new search results.

As an example, as to the selection block 1150, a graphical user interface may include a slider control and/or other type of control that can be actuated via touch, voice command, mouse, stylus, etc., to select one or more times. As an example, results (e.g., comparison of results) may be rendered to a display responsive to actuation of a time control (e.g., a slider, etc.).

As shown in the method 1100, where the decision block 1140 decides to not compare, the method 1100 may continue at a continuation block 1146. As shown, where the decision block 1190 decides to not perform an adjustment to a time or times, the method 1100 may continue to the continuation block 1146 (e.g., to continue to a termination block, another block, etc.).

The method 1100 is shown in Fig. 11 in association with various computer-readable media (CRM) blocks 1111, 1121, 1131, 1141, 1147, 1151, 1161, 1171, 1181 and 1191. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1100. As an example, a computer-readable medium may be non-transitory and not a carrier wave.

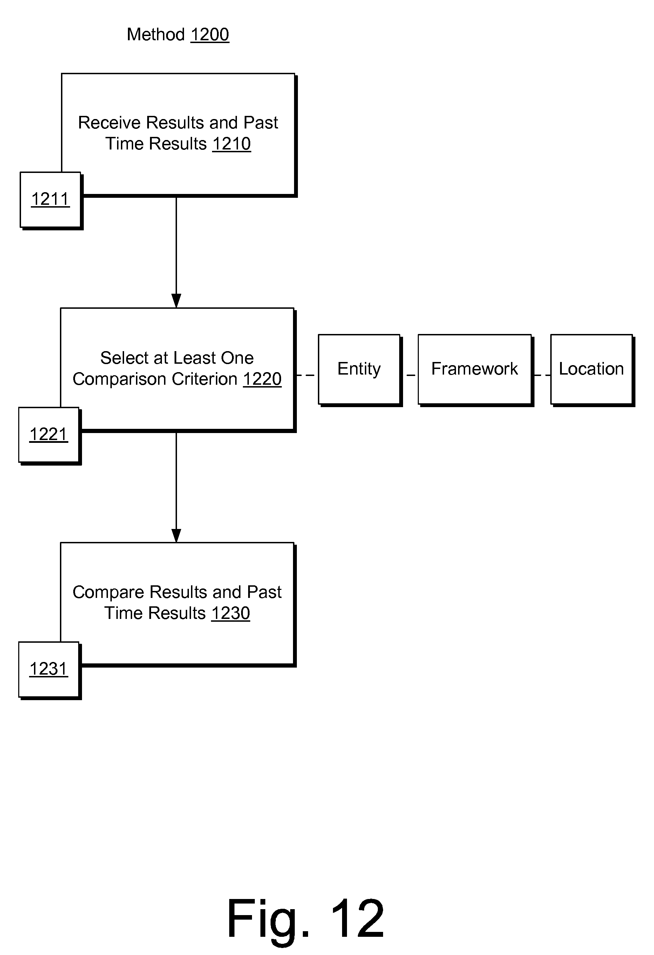

Fig. 12 shows an example of a method 1200 that includes a reception block 1210 for receiving results and past time results, a selection block 1220 for selecting at least one comparison criterion, and a comparison block 1230 for comparing at least a portion of the results and at least a portion of the past results. In such an example, consider one or more criteria such as an entity criterion, a framework criterion, a location criterion, etc. For example, an entity criterion may aim to search for results associated with a person, a company, equipment, etc. that may have generated and/or modified one or more results (e.g., or used such result in one or more calculation, decision making process, etc.); a framework criterion may aim to search for a type and/or version of a framework associated with one or more results (e.g., as generated, modified, used, etc.); and a location criterion may aim to search for one or more locations where a result or results may have been stored, generated, modified, used, etc.

The method 1200 is shown in Fig. 12 in association with various computer-readable media (CRM) blocks 1211, 1221, and 1231. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1200. As an example, a computer-readable medium may be non-transitory and not a carrier wave.

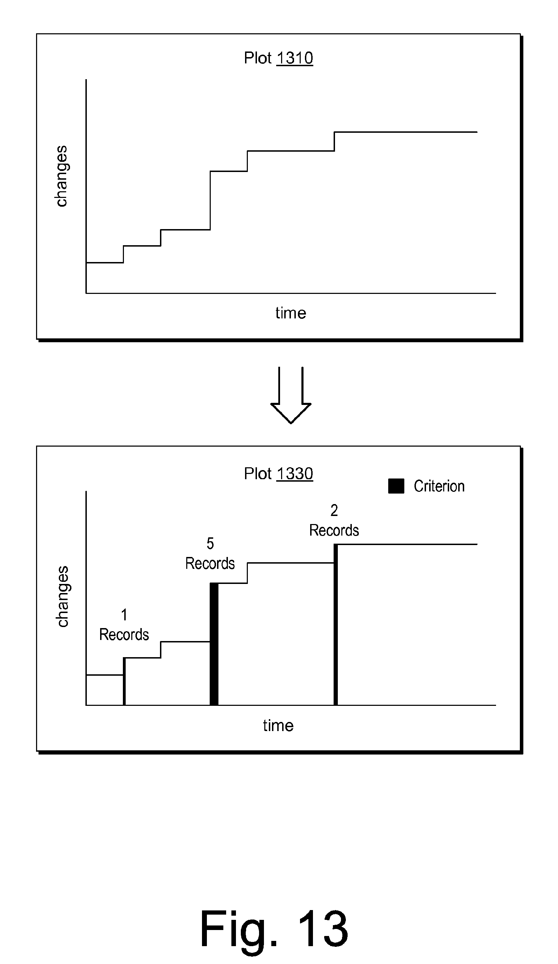

Fig. 13 shows an example plot 1310 and an example plot 1330 that indicate changes with respect to time as to data. For example, in the plot 1310, periods of time exist where no changes are indicated and other periods of time exist, represented substantially as step-changes, where records have been changed. As to the plot 1330, it indicates a number of records at points in time where changes have been made by, for example, an entity specified by an entity criterion. For example, a person may have made such changes. As another example, consider a framework version where a quality control workflow is implemented. In such an example, where an algorithm of that framework version may have provided less than desirable values, such an approach can highlight where changes to data have occurred that used such an algorithm. To provide for quality enhancement, a workflow may include recalculating the values and replacing them in one or more databases, datastores, etc.

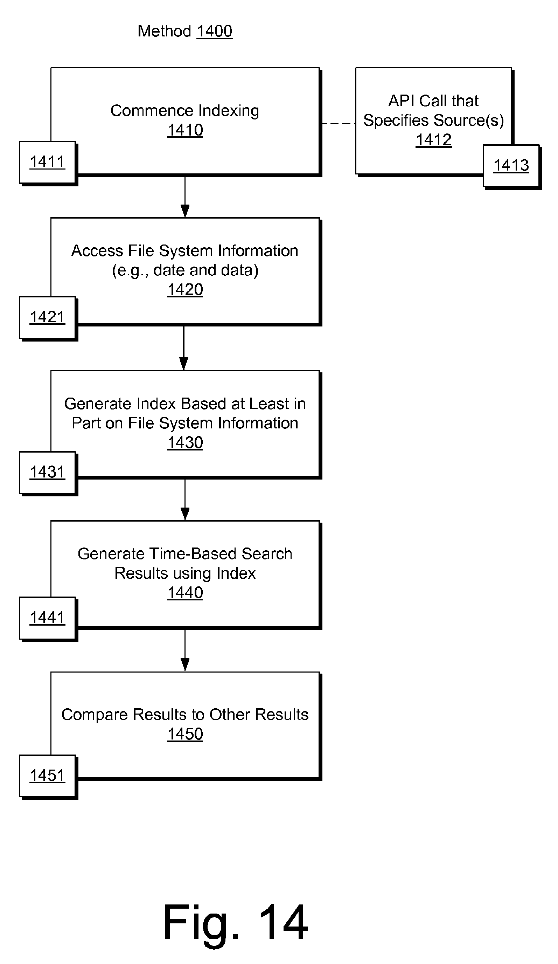

Fig. 14 shows an example of a method 1400 that includes a commencement block 1410 for commencing an indexing process, an access block 1420 for accessing file system information (e.g., one or more logs, namespaces, etc.) where such information includes time information, a generation block 1430 for generating an index based at least in part on file system information, a generation block 1440 for generating time-based search results using the index and a comparison block 1450 for comparing at least a portion of the search results to other results (e.g., other search results).

In the example of Fig. 14, the method 1400 may include making an API call, for example, via an API call block 1412. For example, a utility may include an application programming interface that can receive a call that specifies a task or tasks to be performed. As an example, a task may be to generate an index from file system information of a source or sources. For example, consider a server that includes file system information associated with files where each file has at least one associated time (e.g., creation time, modification time, access time, transmission time, back-up time, etc.). In such an example, the API call may instruct the utility to access the file system information and optionally content of one or more files to generate an index. Such an approach may operate in substantially real-time, for example, depending on the amount of files, etc.

As an example, a utility may include an associated graphical user interface that includes a control to commence indexing. In such an example, input may include a target that is a source of file system information. For example, a user may navigate a network and select a source that includes file system information where the utility may access such information for generation of an index (e.g., optionally including accessing content of one or more files as well).

The method 1400 is shown in Fig. 14 in association with various computer-readable media (CRM) blocks 1411, 1413, 1421, 1431, 1441, and 1451. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1400. As an example, a computer-readable medium may be non-transitory and not a carrier wave.

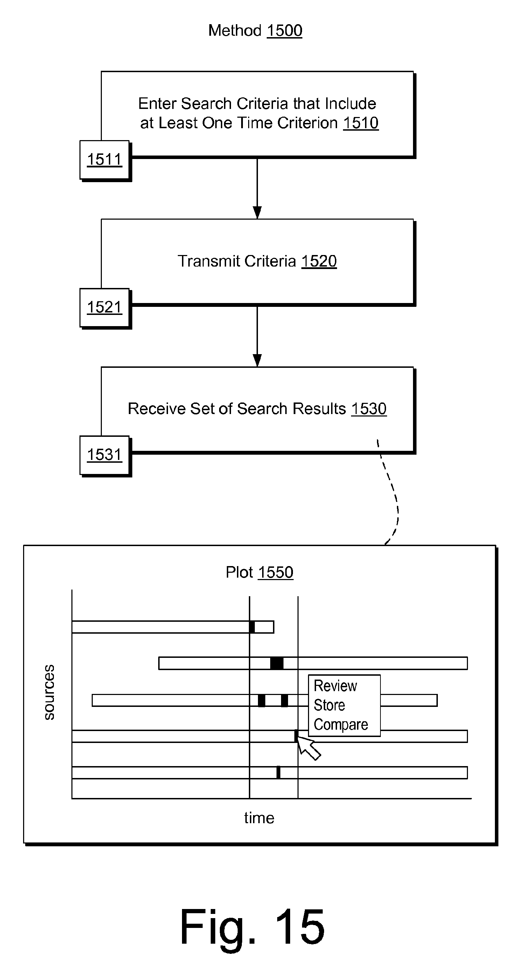

Fig. 15 shows an example of a method 1500 that includes an entry block 1510 for entering search criteria that include at least one time criterion (e.g., receiving search criteria), a transmission block 1520 for transmitting the search criteria (e.g., via one or more networks, etc.), and a reception block 1530 for receiving a set of search results based at least in part on searching one or more sources via one or more indexes.

Fig. 15 also shows an example of a plot 1550 that includes sources with information that spans periods of time. In the plot 1550, vertical lines represent a search criterion, for example, a period of time or time window within which searches were performed for the plurality of sources (e.g., indexes for such sources). In the plot 1550, solid blocks represent records (e.g., search results) that exist in the particular sources. As an example, the plot 1550 may be generated via a graphical user interface (e.g., a module, instructions, etc.) and may include one or more controls. For example, consider a control that can select one or more records (e.g., search results) and perform one or more actions with respect thereto. For example, consider one or more of a review action, a store action, a compare action, etc.

As an example, a search criterion may specify how data were used. For example, particular seismic data may be suitable for trials to develop an attribute algorithm (e.g., to output a seismic attribute). In such an example, a developer of an attribute algorithm may specify a criterion to provide search results as to data that may be suitable for trials, for example, to determine quality of the attribute algorithm. Where particular data has been used a number of times, the developer may uncover such data and, for example, times at which such data were used. The developer may then select such data and retrieve it for purposes of development, quality control trials, etc. As an example, one or more other criteria may be implemented in a search. For example, a lithology based criterion may be used, particularly where a seismic attribute aims to highlight or otherwise differentiate such lithology by processing data (e.g., seismic data and/or other type(s) of data).

The method 1500 is shown in Fig. 15 in association with various computer-readable media (CRM) blocks 1511, 1521, and 1531. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1500. As an example, a computer-readable medium may be non-transitory and not a carrier wave.

As an example, search indexes may be searched where at least one of the search indexes is a historical search index. For particular search criteria, such an approach may allow a user to "drill" in on certain types of changes to a project via a search tool. In such an example, changes may provide insight as to development of a particular aspect/aspects of a project and, via such a tool, to possibly identify who made a change, why a change was made, etc.

As an example, a historical search index may provide information as to data that may no longer exist, may be re-tagged, may be updated, etc. In such an example, a search index may include information as to existence of historical "data" even where the data may no longer exist as it did at that historical time (e.g., consider a webpage in search results where the webpage no longer exists). As an example, time may be considered a criterion that is other than a "search criterion". For example, time may be considered a selector of a particular historical search index. As an example, where old search indexes are stored, a tool (e.g., slider tool, wheel, etc.) may be an expeditious way of looking into the past - as opposed to looking for data itself in a data store, noting that that some data may no longer exist in that data store.

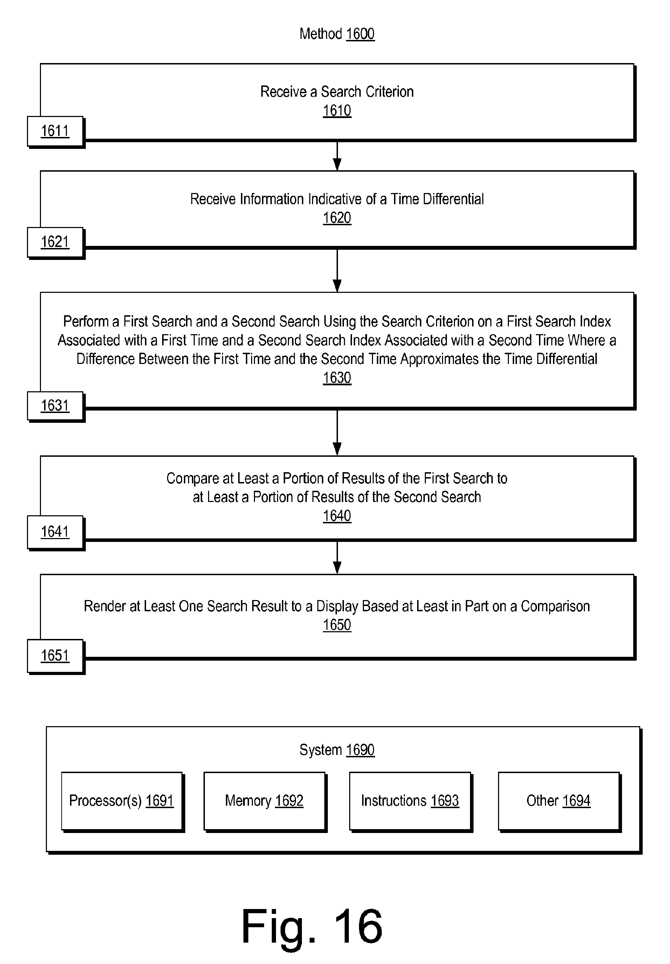

Fig. 16 shows an example of a method 1600 and an example of a system 1690. As shown, the method 1600 includes a reception block 1610 for receiving a search criterion; a reception block 1620 for receiving information indicative of a time differential; a performance block 1630 for performing a first search and a second search using the search criterion on a first search index associated with a first time and a second search index associated with a second time where a difference between the first time and the second time approximates the time differential (e.g., to associated times with times of indexes, etc.); a comparison block 1640 for comparing at least a portion of results of the first search to at least a portion of results of the second search; and a render block 1650 for rendering at least one search result to a display based at least in part on the comparing.

The method 1600 is shown in Fig. 16 in association with various computer-readable media (CRM) blocks 1611, 1621, 1631, 1641 and 1651. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1600. As an example, a computer-readable medium may be non-transitory and not a carrier wave.

As an example, a method can include receiving a search criterion; receiving information indicative of a time differential; performing a first search and a second search using the search criterion on a first search index associated with a first time and a second search index associated with a second time where a difference between the first time and the second time approximates the time differential; comparing results of the first search to results of the second search; and rendering at least one search result to a display based at least in part on the comparing. In such an example, receiving information can include receiving information via a time slide graphical control. As an example, at least one search result can include a result common to results of a first search and to results of a second search. As an example, at least one search result can include a result present in results of a first search and not in results of a second search or in the results of the second search and not in the results of the first search. As an example, at least one search result can include a result that differs between the results of the first search and the results of the second search (e.g., a number of items that differ for a comparison of two or more sets of search results).

As an example, a method can include receiving search criteria and performing a first search and a second search using the search criteria where the first and second searches may be performed using two different search indexes where one was created prior to the other. As an example, a system may include a storage device that stores historical search indexes and that provides access thereto.

As an example, a method can include using search indexes that correspond to respective corpuses of project data associated with a seismic-to-simulation framework (e.g., Project A and Project B, etc.).

As an example, a search criterion may specify geographic information. As an example, a search criterion may specify an entity, for example, where the entity may be an individual or a company. As an example, an entity may be an entity of a framework (e.g., a well, a piece of equipment, etc.).

As an example, a method can include generating a search index. As an example, a method can include accessing file system information and, for example, generating at least one search index based at least in part on such file system information (e.g., as to times, filenames, directory structures, permissions, etc.).

As an example, a method can include using a first search index that is associated with a first project and using a second search index that is associated with a second project. In such an example, the projects may include one or more common features (e.g., consider at least one well in common). As an example, a first search index can be generated based on first project data stored in a first datasource and a second search index can be generated based on second project data stored in a second datasource where, for example, the locations of the first datasource and the second datasource differ (e.g., different network locations, physical locations, etc.). Such a method may act to perform one or more actions of a quality control workflow (e.g., to compare information, etc.).

As an example, a method can include rendering a graphical user interface to a display where the graphical user interface can include a plurality of controls for comparing at least a portion of the results of the first search to at least a portion of the results of the second search. In such an example, the plurality of controls can include a control selectable for generating search results of records associated with the first search index that differ from records associated with the second search index and records associated with the second search index that differ from records associated with the first search index.

As shown in the example of Fig. 16, the system 1690 can include one or more processors 1691; memory 1692; and instructions 1693 stored in the memory and executable by at least one of the one or more processors 1691 to instruct the system 1691. As an example, the instructions 1693 can include instructions to, for example, receive a search criterion (see, e.g., the block 1611); receive information indicative of a time differential (see, e.g., the block 1621); perform a first search and a second search using the search criterion on a first search index associated with a first time and a second search index associated with a second time where a difference between the first time and the second time approximates the time differential (e.g., to associated times with times of indexes, etc.) (see, e.g., the block 1631); compare results of the first search to results of the second search (see, e.g., the block 1641); and render at least one search result to a display based at least in part on a comparison (see, e.g., the block 1651). As shown, the system 1690 may include one or more other types of circuitry, instructions, etc. 1694 (e.g., hardware, software, hardware and software, etc.). As an example, the system 1690 may include one or more displays (e.g., touchscreen, projectors, etc.). As an example, the system 1690 may include one or more graphics processors (e.g., GPUs), for example, to render information to a display or displays. As an example, a GPU may optionally be instructed to perform one or more actions (e.g., calculations, etc.).

As an example, a system can include one or more processors; memory; and instructions stored in the memory and executable by at least one of the one or more processors to instruct the system, the instructions including instructions to: receive a search criterion; receive information indicative of a time differential; perform a first search and a second search using the search criterion on a first search index associated with a first time and a second search index associated with a second time where a difference between the first time and the second time approximates the time differential; compare at least a portion of results of the first search to at least a portion of results of the second search; and render at least one search result to a display based at least in part on a comparison. In such a system, the search indexes may correspond to respective corpuses of project data associated with a seismic-to-simulation framework. As an example, a system can include instructions to render a graphical control to a display for reception of information indicative of the time differential (e.g., consider a time slider control, time fields, a time differential field, etc.).

As an example, one or more computer-readable media can include processor-executable instructions that instruct a system, the instructions including instructions to: receive a search criterion; receive information indicative of a time differential; perform a first search and a second search using the search criterion on a first search index associated with a first time and a second search index associated with a second time where a difference between the first time and the second time approximates the time differential; compare at least a portion of results of the first search to at least a portion of results of the second search; and render at least one search result to a display based at least in part on a comparison. As an example, one or more computer-readable media can include instructions to render a graphical control to a display for reception of information indicative of the time differential (e.g., consider a time slider control, time fields, a time differential field, etc.).

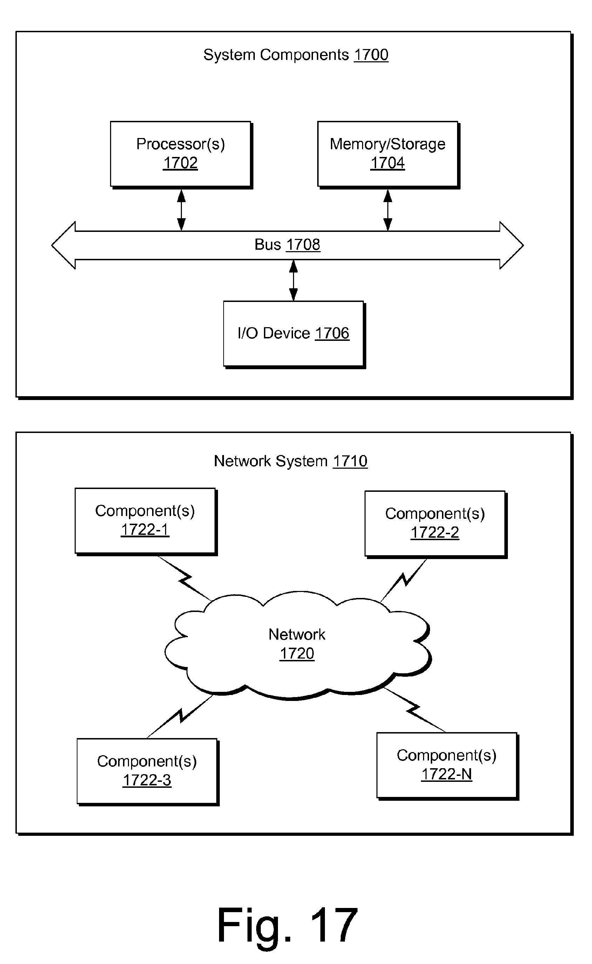

Fig. 17 shows components of an example of a computing system 1700 and an example of a networked system 1710. The system 1700 includes one or more processors 1702, memory and/or storage components 1704, one or more input and/or output devices 1706 and a bus 1708. In an example embodiment, instructions may be stored in one or more computer-readable media (e.g., memory/storage components 1704). Such instructions may be read by one or more processors (e.g., the processor(s) 1702) via a communication bus (e.g., the bus 1708), which may be wired or wireless. The one or more processors may execute such instructions to implement (wholly or in part) one or more modules, components, etc. (e.g., as part of a method). A user may view output from and interact with a process via an I/O device (e.g., the device 1706). In an example embodiment, a computer-readable medium may be a storage component such as a physical memory storage device, for example, a chip, a chip on a package, a memory card, etc.

In an example embodiment, components may be distributed, such as in the network system 1710. The network system 1710 includes components 1722-1, 1722-2, 1722-3, ... 1722-N. For example, the components 1722-1 may include the processor(s) 1702 while the component(s) 1722-3 may include memory accessible by the processor(s) 1702. Further, the component(s) 1702-2 may include an I/O device for display and optionally interaction with a method. The network may be or include the Internet, an intranet, a cellular network, a satellite network, etc.

As an example, a device may be a mobile device that includes one or more network interfaces for communication of information. For example, a mobile device may include a wireless network interface (e.g., operable via IEEE 802.11, ETSI GSM, BLUETOOTH®, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words "means for" together with an associated function.

## Claims

1. A method (1600) comprising:
receiving a search criterion (1610);
receiving information indicative of a time differential (1620);
performing a first search and a second search using the search criterion on a first search index associated with a first time and a second search index associated with a second time wherein a difference between the first time and the second time approximates the time differential (1630);
comparing at least a portion of results of the first search to at least a portion of results of the second search (1640); and
rendering at least one search result to a display based at least in part on the comparing (1650).

2. The method of claim 1 wherein the receiving information comprises receiving information via a time slider graphical control.

3. The method of claim 1 wherein the at least one search result comprises a result common to the results of the first search and to the results of the second search.

4. The method of claim 1 wherein the at least one search result comprises a result present in the results of the first search and not in the results of the second search or in the results of the second search and not in the results of the first search.

5. The method of claim 1 wherein the at least one search result comprises a result that differs between the results of the first search and the results of the second search.

6. The method of claim 1 comprising receiving search criteria and performing the first search and the second search using the search criteria.

7. The method of claim 1 wherein the search indexes correspond to respective corpuses of project data associated with a seismic-to-simulation framework.

8. The method of claim 1 wherein the search criterion specifies geographic information.

9. The method of claim 1 wherein the search criterion specifies an entity wherein the entity comprises at least one member selected from a group consisting of an individual and a company.

10. The method of claim 1 further comprising generating the first search index.

11. The method of claim 10 wherein the generating comprises accessing file system information.

12. The method of claim 1 wherein the first search index is associated with a first project and wherein the second search index is associated with a second project, wherein the first search index is generated based on first project data stored in a first datasource and wherein the second search index is generated based on second project data stored in a second datasource wherein the locations of the first datasource and the second datasource differ.

13. The method of claim 1 comprising rendering a graphical user interface to a display wherein the graphical user interface comprises a plurality of controls for comparing at least a portion of the results of the first search to at least a portion of the results of the second search.

14. A system (1690) comprising:
one or more processors (1691);
memory (1692); and
instructions (1693) stored in the memory and executable by at least one of the one or more processors to instruct the system, the instructions comprising instructions to:
receive a search criterion (1611);
receive information indicative of a time differential (1621);
perform a first search and a second search using the search criterion on a first search index associated with a first time and a second search index associated with a second time wherein a difference between the first time and the second time approximates the time differential (1631);
compare at least a portion of results of the first search to at least a portion of results of the second search (1641); and
render at least one search result to a display based at least in part on a comparison (1651).

15. One or more computer-readable media comprising processor-executable instructions that instruct a system, the instructions comprising instructions to:
receive a search criterion (1611);
receive information indicative of a time differential (1621);
perform a first search and a second search using the search criterion on a first search index associated with a first time and a second search index associated with a second time wherein a difference between the first time and the second time approximates the time differential (1631);
compare at least a portion of results of the first search to at least a portion of results of the second search (1641); and
render at least one search result to a display based at least in part on a comparison (1651).
